# EUROPEAN PATENT APPLICATION

(11) **EP 2 033 893 A2**
(43) Date of publication of application: **11.03.2009**
(21) Application number: 08163626.8
(22) Date of filing: 03.09.2008
(51) Int. Cl.: B64D 27/20, B64D 29/04, B64D 35/08

(54) **Aircraft engine system with gearbox unit**

(30) Priority: 06.09.2007 US 850871
(71) Applicant: Honeywell International Inc., Morristown, NJ 07962 (US)
(72) Inventor: Blumer, Eric W., Scottsdale, AZ 85259 (US)
(74) Representative: Buckley, Guy Julian

(57) **Abstract**

An engine system (228) for an aircraft includes an engine (212,214) and a gearbox (220,222). The engine (112,114) is mounted in a nacelle region (216,218) of the aircraft. The gearbox (220,222) is coupled to the engine (212,214), and is mounted in a fuselage region of the aircraft. The nacelle region (216,218) is separated from the fuselage region (204) by a structure (230).

## Description

### TECHNICAL FIELD

The present invention relates generally to an aircraft engine system and, more particularly, to an aircraft engine system with a gearbox unit.

### BACKGROUND

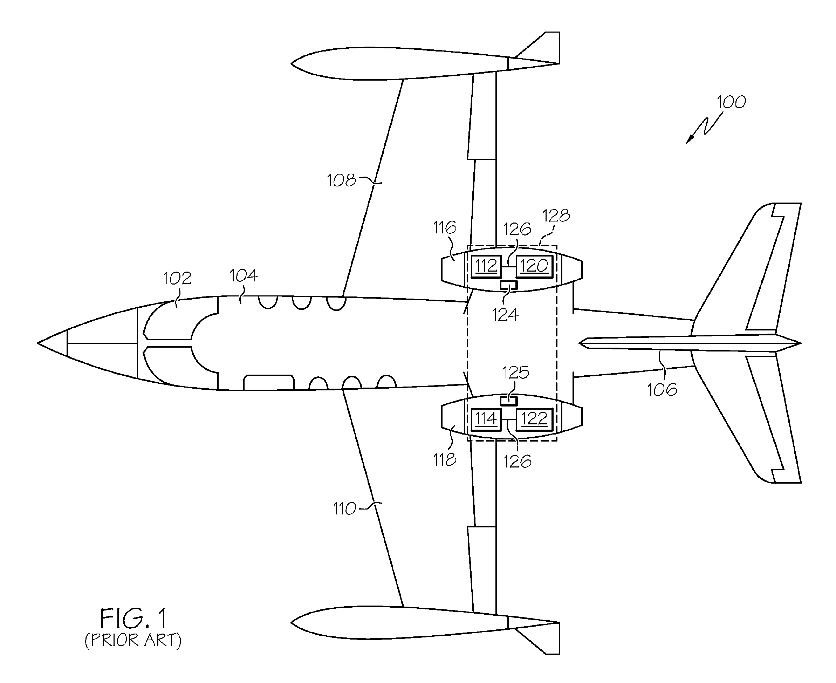

As shown with the exemplary aircraft 100 of FIG. 1, an aircraft 100 generally includes a cockpit region 102, a fuselage region 104, a rudder 106, first and second wings 108, 110, first and second engines 112, 114, and first and second nacelle regions 116, 118. Typically, the first engine 112 is disposed within the first nacelle region 116, and the second engine 114 is disposed within the second nacelle region 118. In various types of aircraft 100, there may be a different number of nacelle regions, each typically having a corresponding engine disposed therein. As is commonly known, the first and second engines 112, 114 provide power for the aircraft and for various components thereof.

Typically, each engine is coupled to a gearbox within its respective nacelle region. For example, as depicted in FIG. 1, the first engine 112 is coupled to a first gearbox 120 disposed within the first nacelle region 116, while the second engine 114 is coupled to a second gearbox 122 disposed within the second nacelle region 118. The gearboxes 120, 122 transfer power from the respective engines 112, 114 to various engine accessories 124 disposed within the first and second nacelle regions 116, 118, via one or more tower shafts 126 connecting the first and second gearboxes 120, 122 to the engine accessories 124 and to the first and second engines 112, 114. The engine accessories 124 may include a generator, a hydraulic pump, an IDG, a fuel pump, an oil pump, a PMA, a cooling fan, a starter, and/or various other gearbox mounted devices. It will be appreciated that the first and second gearboxes 120, 122 may be coupled to the engine accessories 124 via a tower shaft 126 or similar direct gear devices. For ease of reference, the first and second engines 112, 114, the first and second gearboxes 120, 122, the engine accessories 124, and the tower shaft 126 are collectively referred to as an engine system 128, as shown in FIG. 1.

While the configuration of the engine system 128 of FIG. 1 is generally effective in controlling various types of aircraft, it may be desirable for certain aircraft to have a smaller nacelle region, for example to reduce drag and improve aerodynamics of the aircraft. It may also be desirable for an aircraft to have a reduced weight, for example to improve aerodynamics of the aircraft and/or to reduce manufacturing costs and/or fuel costs for operating the aircraft.

Accordingly, it is desired to provide an aircraft engine system that allows an aircraft to have a smaller nacelle region. In addition, it is desirable to provide an aircraft engine system that allows the aircraft to have a reduced weight. Additionally, it is desirable to provide an aircraft engine system that improves aerodynamics of the aircraft. It is also desirable to provide an aircraft engine system that allows for reduced manufacturing costs for the aircraft. It is further desirable to provide an aircraft engine system that allows for reduced fuel costs for operating the aircraft. Furthermore, the desirable features and characteristics of the present invention will be apparent from the subsequent detailed description and the appended claims, taken in conjunction with the accompanying drawings and the foregoing technical field and background.

### BRIEF SUMMARY

In accordance with an exemplary embodiment of the present invention, an engine system for an aircraft is provided. The engine system comprises an engine and a gearbox. The engine is mounted in a nacelle region of the aircraft. The gearbox is coupled to the engine, and is mounted in a fuselage region of the aircraft. The fuselage region is separated from the fuselage region by a structure.

In accordance with another exemplary embodiment of the present invention, an engine system for an aircraft is provided. The engine system comprises a beam structure, a first engine, a second engine, a first gearbox, and a second gearbox. The first engine is mounted on the beam structure, and the second engine is mounted on the beam structure. The first gearbox is mounted on the beam structure between the first engine and the second engine, and is coupled to the first engine. The second gearbox is mounted on the beam structure between the first engine and the second engine, and is coupled to the second engine.

In accordance with a further exemplary embodiment of the present invention, an engine system for an aircraft is provided. The engine system comprises a beam structure, a first engine, a second engine, and an engine accessory unit. The first engine is mounted on the beam structure in a first nacelle region of the aircraft. The second engine is mounted on the beam structure in a second nacelle region of the aircraft. The engine accessory unit is mounted on the beam structure between the first engine and the second engine, outside the first and second nacelle regions of the aircraft. The engine accessory unit comprises a gearbox unit coupled to one or more of the first engine and the second engine.

Other independent features and advantages of the preferred systems and methods will become apparent from the following detailed description, taken in conjunction with the accompanying drawings which illustrate, by way of example, the principles of the invention.

### BRIEF DESCRIPTION OF THE DRAWINGS

FIG. 1 is a simplified schematic diagram of an aircraft in accordance with the prior art;

FIG. 2 is a simplified schematic diagram of an aircraft having an engine system in accordance with an exemplary embodiment of the present invention; and

FIG. 3 is a simplified schematic diagram of an engine system for an aircraft, such as the aircraft of FIG. 2, in accordance with an exemplary embodiment of the present invention.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background or the following detailed description. In this regard, although the invention is described herein as being implemented in a particular type of aircraft, it will be appreciated that it could also be implemented in any one of numerous other types of aircraft.

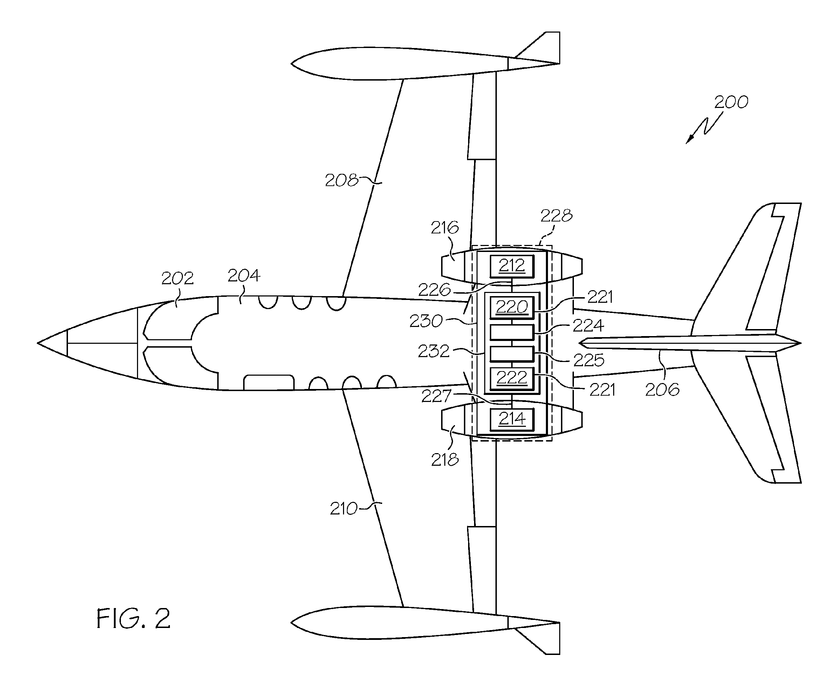

FIG. 2 is a simplified schematic diagram of an aircraft 200 in accordance with an exemplary embodiment of the present invention. As depicted in FIG. 2, the aircraft 200 includes a cockpit region 202, a fuselage region 204, a rudder 206, first and second wings 208, 210, first and second nacelle regions 216, 218, and an engine system 228. In the depicted embodiment, the first and second nacelle regions 216, 218 are disposed toward a rear end of the aircraft 200 near the rudder 206. However, in other embodiments the first and second nacelle regions 216, 218 may instead by disposed proximate the first and second wings 208, 210, respectively, or elsewhere on the aircraft 200. In a preferred embodiment, the first and second nacelle regions 216, 218 are separated from the fuselage region 204 by a structure, such as some or all of the first and second wings 208, 210, respectively.

In one preferred embodiment, the engine system 228 includes a beam structure 230, a first engine 212, a second engine 214, an engine accessory unit 232, and tower shafts 226, 227. The beam structure 230 is fabricated from any substantially rigid material that can support the first engine 212 and the second engine 214. The beam structure 230 is preferably made of metal, most preferably including titanium and/or aluminum. However, in other embodiments, one or more durable polymers, carbon fiber systems, and/or other substantially rigid materials may be used. Regardless of the material used, the first engine 212 is mounted on or within the beam structure 230 in a preferred embodiment, and is disposed within a first nacelle region 216 of the aircraft 200. The second engine 214 is also mounted on or within the beam structure 230, and is disposed within a second nacelle region 218 of the aircraft 200.

In certain embodiments, the first engine 212 and the second 214 engine may be coupled to the engine accessory unit 232 via the tower shafts 226, 227. In certain other embodiments, the first engine 212 and/or the second 214 engine may be coupled to the engine accessory unit 232 via one or more of a pneumatic, hydraulic, or electrical connection. In such embodiments, the first and second engines 212, 214 need not be mounted on the same beam structure 230. Also in certain embodiments, combinations of such coupling devices and/or techniques, and/or coupling devices and/or techniques, can be used.

In one embodiment, the beam structure 230 is substantially planar and extends from the first nacelle region 216 through the fuselage region 204 to the second nacelle region 218. In this embodiment, the tower shafts 226, 227 are preferably mounted onto the beam structure 230. In another embodiment, the beam structure 230 includes square tubular portions in the first nacelle region 216 and the second nacelle region 218 and a round tubular portion in the fuselage region 204 connecting the respective square tubular portions from the first and second nacelle regions 216, 218. In this embodiment, the tower shafts 226, 227 are preferably mounted through the beam structure 230. The beam structure 230 can include any number of planar portions or tubular portions of different shapes and configurations.

The beam structure 230 can be formed either as one integral piece or as separate pieces. For example, in one embodiment the beam structure 230 is a unitary structure extending between the first nacelle region 216 and the second nacelle region 218. In this embodiment, the first engine 212, the second engine 214, and the engine accessory unit 232 can each be mounted onto the beam structure 230 prior to insertion into the aircraft 200. The engine system 228 can thus be manufactured entirely or nearly entirely outside of the aircraft 200, and can then be subsequently inserted into the aircraft 200 as a single unit. Alternatively, the beam structure 230 can be first inserted into the aircraft 200, and the first engine 212, the second engine 214, and the engine accessory unit 232 subsequently can be mounted onto the beam structure 230 inside the aircraft 200.

In another embodiment, the beam structure 230 is fabricated using various non-integral portions that can then be joined together inside the aircraft 200. For example, the beam structure 230 may include a first end portion for placement in the first nacelle region 216, a second end portion for placement in the second nacelle region 218, and a middle portion for placement in the fuselage region 204. The first and second end portions can then be bonded to the middle portion inside the aircraft 200. This embodiment allows for the beam structure 230 to be shipped in smaller pieces and to be subsequently assembled inside the aircraft 200. The first engine 212, the second engine 214, and the engine accessory unit 232 can be mounted onto the first end portion, the second end portion, and the middle portion, respectively, either before or after the insertion of the first end portion, the second end portion, and the middle portion into the aircraft 200 and/or the coupling of these portions of the beam structure 230 together inside the aircraft 200.

The engine accessory unit 232 is mounted on or within the beam structure 230 within the fuselage region 204, outside of both the first and second nacelle regions 216, 218. The engine accessory unit 232 includes gearbox units 221 and a plurality of engine accessories 224. The gearbox units 221 include a first gearbox 220 coupled to the first engine 212, and a second gearbox 222 coupled to the second engine 214. The first and second gearboxes 220, 222 are coupled to the respective first and second engines 212, 214, as well as to the plurality of engine accessories 224, via the tower shafts 226, 227. The first and second gearboxes 220, 222 thereby transfer power from the respective first and second engines 212, 214 to the plurality of engine accessories 224 via the tower shaft 226. In addition to engine accessories 224, other systems can be mounted on or within the beam structure 230, such as an environmental control system, an auxiliary power unit, an electrical power system, and/or various other devices not depicted in FIG. 2.

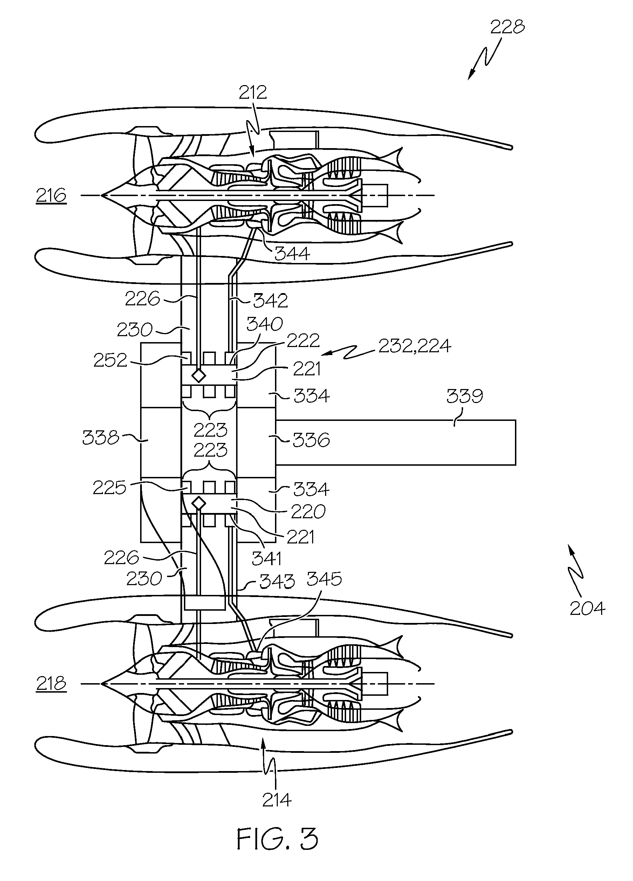

FIG. 3 is a simplified schematic diagram of an exemplary embodiment of the engine system 228 of FIG. 2, in accordance with the present invention. In the depicted embodiment, the first and second gearboxes 220, 222 can be formed at least partially integral with the beam structure 230 in the fuselage region 204 of the aircraft 200. Specifically, the first and second gearboxes 220, 222 share one or more structures, such as one or more common walls, panels, housing, or infrastructure, with the beam structure 230, thereby economizing space and material and allowing for a reduction of the size and/or weight for the aircraft 200 as a whole. This, along with various other potential ways to economize space and material and to reduce the overall size and/or weight for the aircraft 200 can improve aerodynamic performance for the aircraft 200, reduce manufacturing costs for the aircraft 200, and reduce fuel consumption and costs for operation of the aircraft 200.

Also in the depicted embodiment, the first and second gearboxes 220, 222 each include various gearbox accessories 223 connected thereto. The gearbox accessories 223 may include one or more of the following: lube modules, fuel pumps, starters, generators, and/or various other devices. In one exemplary embodiment, oil sumps 225 are formed at least partially integral within the beam structure 230 in proximity to the first and second gearboxes 220, 222 to collect oil or other debris from the first and second gearboxes 220, 222. In this embodiment, the overall size and/or weight for the aircraft 200 can be further reduced because the oil sumps 225 share structures, such as common walls or panels, with the beam structure 230, thereby further economizing on space and material.

Furthermore, because the first and second gearboxes 220, 222 and the gearbox accessories 223 are located outside of the first and second nacelle regions 216, 218, the first and second nacelle regions 216, 218 can be simplified and reconfigured. For example, the first and second nacelle regions 216, 218 are lighter because they no longer house the first and second gearboxes 220, 222 and the gearbox accessories 223, along with any associated housing, therein. This also allows for the first and second nacelle regions 216, 218 to be manufactured with a reduced surface area, frontal area and volume, thereby reducing wind resistance.

Additionally, without the first and second gearboxes 220, 222 and gearbox accessories 223 being disposed therein, the first and second nacelle regions 216, 218 do not generally need to be accessed frequently. Accordingly, the size and/or number of relatively heavy access panels and doors in the first and second nacelle regions 216, 218 can be reduced, thereby allowing a further reduction of the weight of the first and second nacelle regions 216, 218. This also allows for the use of additional composite material, which is generally relatively light and inexpensive, in the first and second nacelle regions 216, 218. Additionally, the first and second gearboxes 220, 222 and gearbox accessories 223 can now be accessed more easily in the fuselage region 204 of the aircraft 200, and with combined access with other systems such as an auxiliary power unit, an environmental control system, an electrical power system, and/or other systems.

The above-referenced plurality of engine accessories 224 as depicted in the exemplary embodiment of FIG. 3 include one or more environmental control systems 334, an auxiliary power unit 336, and an electrical power system 338. A separation of functions for redundancy and robustness can be accomplished with separate fire zones and proximity separation from high energy projectiles. The environmental control system(s) 334 control air temperature, cabin air flow, and/or various other environmental conditions of the aircraft 200. In the depicted embodiment, the environmental control systems 334 are pneumatically powered. Specifically, the environmental control systems 334 receive inlet air from one or both of the first and second engines 212, 214, and/or through a non-depicted air inlet formed in the fuselage region 204 or one of the first or second nacelle regions 216, 218. Alternatively, in certain embodiments the environmental control systems 334 may instead be powered electronically. Exhaust air could exit the environmental control systems 334 through a shared exhaust duct 339, preferably formed at least partially within the engine accessory unit 232 and/or the beam structure 230, as shown in FIG. 3. The environmental control systems 334 may be pneumatically, electrically, thermally, and/or structurally coupled to one or more of the first and second engines 212, 214.

Regardless of how they are powered, the environmental control systems 334 are preferably formed at least partially integral with the beam structure 230, preferably sharing one or more walls, panels, housing, or infrastructure in common with the beam structure 230. For example, in an exemplary embodiment in which the beam structure 230 includes one or more metal walls with flow passages therein, the environmental control systems 334 use such metal walls as a heat exchanger. Specifically, such metal walls in the beam structure 230 serve to separate multiple fluid reservoirs in the environmental control systems 334, and allow for fluid flow and heat exchange therebetween via the flow passages in the metal walls. In this embodiment, a separate heat exchanger structure is not required, as it is at least partially built into the beam structure 230, thereby economizing on space and material, and allowing for a further reduction in the overall size and/or weight of the aircraft 200. While two environmental control systems 334 are depicted in FIG. 3, it will be appreciated that the number of environmental control systems 334, and/or the number of various other components of the engine system 228 and the aircraft 200, may vary.

The auxiliary power unit 336 provides pneumatic or electric power to start the first and second engines 212, 214, and provides pneumatic and/or electric power for the aircraft 200 while the aircraft 200 is on the ground. As mentioned above, the auxiliary power unit 336 may also be used to pneumatically and/or electrically power the environmental control systems 334. Additionally, the auxiliary power unit 336 may be used to similarly power the electrical power system 338. In the depicted embodiment, the auxiliary power unit 336 receives inlet air from one or both of the first and second engines 212, 214, and/or through a non-depicted air inlet formed in the fuselage region 204 or one of the first or second nacelle regions 216, 218. The auxiliary power unit 336 then generates high pressure air used to pneumatically start the environmental control systems 334. Alternatively, in certain embodiments, the auxiliary power unit 336 instead drives a non-depicted motor that powers the environmental control systems 334 and/or the first and second engines 212, 214.

In the depicted embodiment, the auxiliary power unit 336 shares a common exhaust duct 339 with the environmental control systems 334, thereby further economizing space and material and allowing for a further reduction in the size and/or weight for the engine system 228 and the aircraft 200. In addition, similar to the environmental control systems 334, the auxiliary power unit 336 is preferably formed at least partially integral with the beam structure 230, for example with common walls, panels, housing, and/or infrastructure, thereby allowing for further reductions in the size and/or weight for the engine system 228 and the aircraft 200 by further economizing space and material.

The electrical power system 338 provides electrical power for the aircraft 200, and is coupled to one or more of the first engine 212, the second engine 214, and the auxiliary power unit 336. Similar to the environmental control systems 334 and the auxiliary power unit 336, the electrical power system 338 is also preferably formed at least partially within the beam structure 230, for example with common walls, panels, housing, and/or infrastructure. The electrical power system 338 can include generation, conversion, and distribution elements. The size and/or weight of the engine system 228 and the aircraft 200 can thereby be further reduced through such use of common material and space for various portions of the electrical power system 338 and the beam structure 230. In addition, reductions in time and cost of aircraft assembly and checkout can also be achieved.

The environmental control systems 334, the auxiliary power unit 336, and the electrical power system 338 are each preferably mounted on and/or formed within the beam structure 230 in close proximity to one another, and most preferably in at least partial integration with one another. For example, as described above, the exhaust duct 339 preferably is shared between the environmental control systems 334 and the auxiliary power unit 336. Additionally, the environmental control systems 334, the auxiliary power unit 336, and the electrical power system 338 preferably share one or more common walls, housing, electrical conduits, inlets, panels, and/or doors, to allow for further reductions in the size and/or weight for the engine system 228 and the aircraft 200. The close proximity of the environmental control systems 334, the auxiliary power unit 336, and the electrical power system 338 to one another and to the gearbox unit 221 also makes it easier for these components to transfer or exchange bleed air, compressed air, electrical power, and/or other fluids and/or power therebetween, and thereby reducing any potential for leakage while improving performance of the engine system 228.

As shown in FIG. 3, in an exemplary embodiment the first and second engines 212, 214 may be coupled to the first and second gearboxes 220, 222 via the first and second tower shafts 226, 227. Alternatively, in certain other embodiments, the first and second engines 212, 214 are instead pneumatically and/or electronically coupled to the first and second gearboxes 220, 222, for example for transient and continuous operation.

Additionally, in certain embodiments the first and second engines 212, 214 may be coupled to first and second air turbine starters 340, 341 mounted on the first and second gearboxes 220, 222, respectively. For example, as depicted in FIG. 3, the first and second engines 212, 214 may be connected pneumatically to the first and second air turbine starters 340, 341 via one or more bleed ducts 342, 343 and control valves 344, 345. This can be used, for example, to provide main engine starting and/or opposite engine starting, and providing for continuous operation for improved engine efficiency and operability.

Thus, in an exemplary embodiment, the engine system 228 includes the first and second engines 212, 214 mounted on the beam structure 230 within the first and second nacelle regions 216, 218. In this exemplary embodiment, the engine system 228 also includes the first and second gearboxes 220, 222 and the plurality of engine accessories 224 each mounted on or within a beam structure 230 in close proximity to one another and outside of the first and second nacelle regions 216, 218. The engine system 228 allows for integration of various components of the engine system 228 with the beam structure 230, and with one another. The engine system 228 potentially reduces the size and/or weight for the first and second nacelle regions 216, 218, and the size and/or weight for the aircraft 200 as a whole. Accordingly, the engine system 228 can reduce manufacturing costs for the aircraft 200, reduce fuel consumption and costs for operating the aircraft 200, improve access to desired components, and improve the aerodynamic performance of the aircraft 200.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An engine system (128) for an aircraft (100), the engine system (128) comprising:
an engine (112, 114) mounted in a nacelle region (216, 218) of the aircraft (100); and
a gearbox (220, 222) coupled to the engine (112, 114) and mounted in a fuselage region (104) of the aircraft (100), the nacelle region (216, 218) separated from the fuselage region (104) by a structure (230).

2. The engine system (128) of Claim 1, wherein the engine (112, 114) is coupled to the gearbox (220, 222) via one or more of a pneumatic, hydraulic, or electrical connection.

3. The engine system (128) of Claim 1, further comprising:
a tower shaft (226, 227) coupling the engine (112) to the gearbox (220).

4. The engine system (128) of Claim 1, further comprising:
an environmental control system (334) coupled to the engine (112);
an auxiliary power unit (336) coupled to the engine (112); and
an electrical power system (338) coupled to the engine (112),
wherein the gearbox (220) is formed at least partially integral with one or more of the environmental control system (334), the auxiliary power unit (336), and the electrical power system (338).

5. An engine system (128) for an aircraft (100), the engine system (128) comprising:
a beam structure (230);
a first engine (112) mounted on the beam structure (230);
a second engine (114) mounted on the beam structure (230);
a first gearbox (220) mounted on the beam structure (230) between the first engine (112) and the second engine (114) and coupled to the first engine (112); and
a second gearbox (222) mounted on the beam structure (230) between the first engine (112) and the second engine (114) and coupled to the second engine (114).

6. The engine system (128) of Claim 5, further comprising:
a first tower shaft (226) coupling the first engine (112) with the first gearbox (220); and
a second tower shaft (227) coupling the second engine (114) with the second gearbox (222).

7. The engine system (128) of Claim 5, wherein:
the first engine (112) is mounted in a first nacelle region (216) of the aircraft (100);
the second engine (112) is mounted in a second nacelle region (218) of the aircraft (100); and
the first and second gearboxes (220, 222) are mounted outside the first and second nacelle regions (216, 218) of the aircraft (100).

8. The engine system (128) of Claim 7, further comprising:
an environmental control system (334) mounted on the beam structure (230) between the first and second engines (112, 114) and coupled to one or more of the first and second engines (112, 114);
an auxiliary power unit (336) mounted on the beam structure (230) between the first and second engines (112, 114) and coupled to one or more of the first and second engines (112, 114); and
an electrical power system (338) mounted on the beam structure (230) between the first and second engines (112, 114) and coupled to one or more of the first and second engines (112, 114),
wherein at least one of the first and second gearboxes (220, 222) is formed at least partially integral with one or more of the environmental control system (334), the auxiliary power unit (336), and the electrical power system (338).

9. An engine system (128) for an aircraft (100), the engine system (128) comprising:
a beam structure (230);
a first engine (112) mounted on the beam structure (230) in a first nacelle region (216) of the aircraft (100);
a second engine (114) mounted on the beam structure (230) in a second nacelle region (218) of the aircraft (100); and
an engine accessory unit mounted on the beam structure (230) between the first engine (112) and the second engine (114) and outside the first and second nacelle regions (216, 218) of the aircraft (100), wherein the engine accessory unit comprises a gearbox unit (221) coupled to one or more of the first engine (112) and the second engine (114).

10. The engine system (128) of Claim 9, further comprising:
a tower shaft (226, 227) coupling one or more of the first engine (112) and the second engine (114) to the engine accessory unit.
